# EUROPÄISCHE PATENTSCHRIFT

(11) **EP 2 037 131 B1**
(45) Veröffentlichungstag und Bekanntmachung des Hinweises auf die Patenterteilung: **16.03.2011**
(21) Anmeldenummer: 08016003.9
(22) Anmeldetag: 11.09.2008
(51) Int. Cl.: F16B 37/06, B29C 45/14

(54) **Hybridbauteil**
Hybrid component
Composant hybride

(30) Priorität: 12.09.2007 DE 202007012797 U
(43) Veröffentlichungstag der Anmeldung: 18.03.2009
(73) Patentinhaber: Böllhoff Verbindungstechnik GmbH, 33649 Bielefeld (DE)
(72) Erfinder: Jodeleit, Martin, 33617 Bielefeld (DE); Dembowsky, Hans-Joachim, 21035 Hamburg (DE); Rintelmann, Jochen, 06844 Dessau-Roßlau (DE)
(74) Vertreter: Heyer, Volker

(56) Entgegenhaltungen:
- EP-A- 1 191 175
- EP-A- 1 296 069
- DE-U1-202004 019 153
- GB-A- 1 354 351
- GB-A- 2 378 739

## Beschreibung

### 1. Gebiet der Erfindung

Die vorliegende Erfindung betrifft ein Hybridbauteil zur Befestigung von Funktionselementen, insbesondere im Kraftfahrzeug.

### 2. Hintergrund der Erfindung

Im Stand der Technik sind Kunststoff-Befestiger bekannt, die zur Kopplung bzw. Befestigung von Komponenten an Strukturbauteilen dienen. Ein Anwendungsgebiet ist zum Beispiel der Kraftfahrzeugbau, in dem die Karosse oder der Rahmen des Kraftfahrzeugs ein derartiges Strukturbauteil darstellt. Mit Hilfe dieser Kunststoff-Befestiger werden unter anderem Abdeckungen oder Verkleidungen im Motorraum oder im Innenraum des Kraftfahrzeugs angebracht. Aufgrund der Nachgiebigkeit des Kunststoffs ist die Befestigung dieser Komponenten nicht starr. Daher können beispielsweise Vibrationen im Kraftfahrzeug zu einer Lockerung der Teile und somit zu einer verkürzten Lebensdauer oder einem schnelleren Verschleiß führen.

EP 1 296 069 A2 beschreibt eine abgedichtete, verstellbare und selbsthemmende Schraubverbindung aus einer Mutter und einer Schraube. Die Mutter, die an einem ersten Bauteil befestigt wird, hat eine Bohrung mit einem Gewindeabschnitt und einem glatten zylindrischen Abschnitt. Die Schraube, die über ein Kupplungsteil mit einem zweiten Bauteil lösbar verbunden werden kann, ist an einem Zwischenabschnitt mit mehreren umlaufenden Dichtungsrippen versehen. Die Dichtungsrippen sind bezüglich des zylindrischen Bohrungsabschnitts der Mutter so dimensioniert, dass sie bei Verstellbewegungen der Schraube relativ zur Mutter gleitend gegen den glatten Bohrungsabschnitt der Mutter gedrückt werden. Hierdurch entsteht eine Schraubverbindung, die trotz ihrer Verstellbarkeit fluiddicht und selbsthemmend ist.

GB 2 378 739 A (dem Oberbegriff entspiechend) offenbart einen Blindniet mit einem Befestigungsflansch. Der Befestigungsflansch ist derart gestaltet, dass er einen umfänglichen Hinterschnitt aufweist. An diesem Befestigungsflansch ist eine Federkappe mit einem Hohlraum befestigbar, indem der Befestigungsflansch in den Hohlraum der Federkappe einschnappt. Die Federkappe wiederum kann mit Befestigungsmitteln zum Befestigen einer weiteren Komponente ausgestattet sein.

Es ist daher die Aufgabe der vorliegenden Erfindung, im Vergleich zum Stand der Technik eine stabilere Verbindung bereitzustellen, mit der beispielsweise im Kraftfahrzeugbau Komponenten einfach und dauerhaft an Strukturbauteilen befestigbar sind.

### 3. Zusammenfassung der Erfindung

Die oben genannte Aufgabe wird durch ein Hybridbauteil gemäß dem unabhängigen Patentanspruch 1 sowie durch ein Strukturbauteil mit Hybridbauteil gemäß dem unabhängigen Patentanspruch 8 gelöst. Vorteilhafte Ausfiihrungsformen und Weiterentwicklungen der Erfindung gehen aus der folgenden Beschreibung, den begleitenden Zeichnungen sowie den anhängenden Ansprüchen hervor.

Das erfindungsgemäße Hybridbauteil weist die folgenden Merkmale auf: einen Bauteilfuß bestehend aus einer Blindnietkonstruktion aus Metall, mit dem das Hybridbauteil starr an einem Strukturbauteil befestigbar ist, einen Befestigungsansatz, der mit dem Bauteilfuß verbunden ist und eine Befestigungskontur für eine Funktionskomponente umfasst, während die Funktionskomponente aus Kunststoff besteht und mit dem Befestigungsansatz verbunden ist, so dass über die Funktionskomponente und den Bauteilfuß eine Komponente an das Strukturbauteil koppelbar ist.

Das erfindungsgemäße Hybridbauteil liefert eine hochfeste Anbindungsmöglichkeit für weitere Teile, beispielsweise im Kraftfahrzeug. Als Basis des Hybridbauteils dient eine Blindnietkonstruktion, die eine stabile Verbindung mit beispielsweise dem Rahmen oder der Karosserie des Kraftfahrzeugs bereitstellt. Die Blindnietkonstruktion liefert somit ein starres Fundament für die aus Kunststoff bestehende Funktionskomponente. Die Funktionskomponente ist wiederum das Kopplungsglied zu einer zu befestigenden Komponente. Derartige zu befestigende Komponenten umfassen Stoßfänger, Abdeckungen, Verkleidungen, um nur einige Beispiele aus der Automobilbranche zu nennen.

Gemäß einer Ausführungsform der vorliegenden Erfindung wird der Bauteilfuß durch eine Blindnietmutter oder einen Blindniet gebildet. In weiterer Ausgestaltung umfasst der Bauteilfuß einen Befestigungsansatz, der integral mit dem Bauteilfuß verbunden ist. Dieser Befestigungsansatz ist mit einer Befestigungskontur ausgebildet, auf deren Grundlage eine verdrehsichere und/oder axial unverschiebbare Verankerung der Funktionskomponente am Bauteilfuß realisierbar ist.

Da der Befestigungsansatz durch seine Form die Grundlage für eine form- und/oder kraftschlüssige Verbindung zwischen Bauteilfuß und Funktionskomponente bildet, sind verschiedene Ausführungsformen der Befestigungskontur bevorzugt. Gemäß einer Alternative umfasst die Befestigungskontur einen zylindrischen Bereich mit einer radial außen liegenden Rändelung, die einen Hinterschnitt gegen Rotation und/oder axiale Translation bildet. Gemäß einer weiteren Alternative weist die Befestigungskontur eine durch Kaltumformung erzeugte Verprägung auf.

### 4. Detaillierte Beschreibung der begleitenden Zeichnung

Die vorliegende Erfindung wird unter Bezugnahme auf die begleitende Zeichnung näher erläutert. Es zeigen:
- Fig. 1A bis C: verschiedene Ausführungsformen des Hybridbauteils in perspektivi- scher oder Schnittansicht,
- Fig. 2: eine Schnittdarstellung einer Ausführungsform des Hybridbauteils bestehend aus Blindnietmutter und Pilzkopf,
- Fig. 3: eine perspektivische Darstellung einer Blindnietmutter aus der Aus- führungsform gemäß Fig. 2,
- Fig. 4: eine Draufsicht auf den Nietschaft der Blindnietmutter gemäß Fig. 3,
- Fig. 5A, B: eine teilweise Schnittdarstellung der Blindnietmutter aus Fig. 3 im unbefestigten (A) und im befestigten Zustand (B) in einem Struktur- bauteil,
- Fig. 6: eine Schnittdarstellung der Ausführungsform des Hybridbauteils gemäß Fig. 1B,
- Fig. 7: eine perspektivische Ansicht der Blindnietmutter aus Fig. 6,
- Fig. 8: eine axiale Draufsicht auf den Befestigungsansatz der Blindnietmut- ter aus Fig. 7,
- Fig. 9A, B: die Blindnietmutter aus Fig. 7 im unbefestigten (A) und im befestig- ten Zustand (B) in einem Strukturbauteil,
- Fig. 10: eine Explosionsdarstellung der Ausführungsform des Hybridbauteils gemäß Fig. 1C,
- Fig. 11: eine perspektivische Darstellung des Becherblindniets aus Fig. 10 und
- Fig. 12: eine teilweise Schnittdarstellung des Becherblindniets aus Fig. 10.

### 5. Detaillierte Beschreibung bevorzugter Ausführungsformen

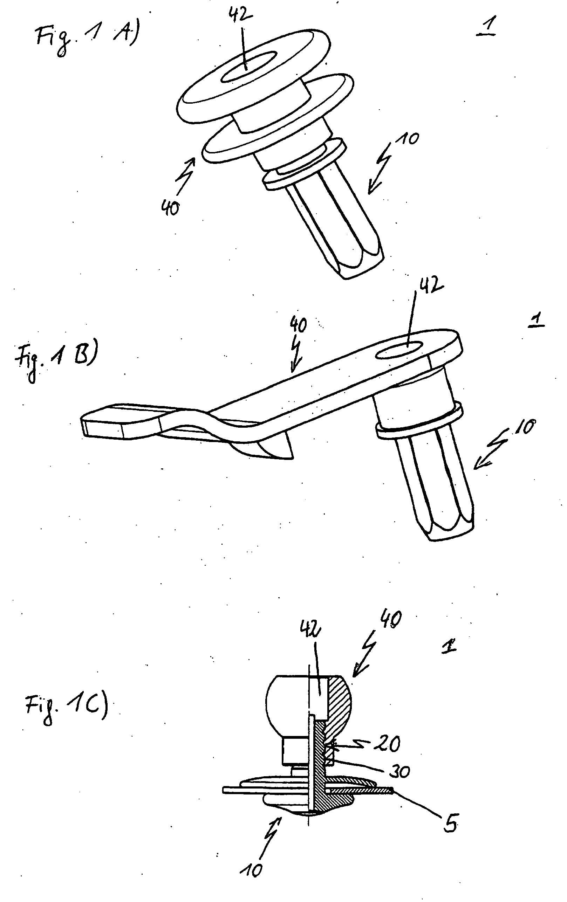

Die Figuren 1A bis C zeigen verschiedene Beispiele für das erfindungsgemäße Hybridbauteil 1. Das Hybridbauteil 1 umfasst jeweils einen Bauteilfuß 10. Dieser besteht aus einer Nietkonstruktion, beispielsweise ähnlich einer Blindnietmutter oder eines Becher-Dichtblindniets. Da der Bauteilfuß aus Metall hergestellt und an einem Strukturbauteil 5 befestigbar ist, ist das gesamte Hybridbauteil 1 ebenfalls starr an dem Strukturbauteil 5, beispielsweise ein Rahmen eines Kraftfahrzeugs, befestigbar.

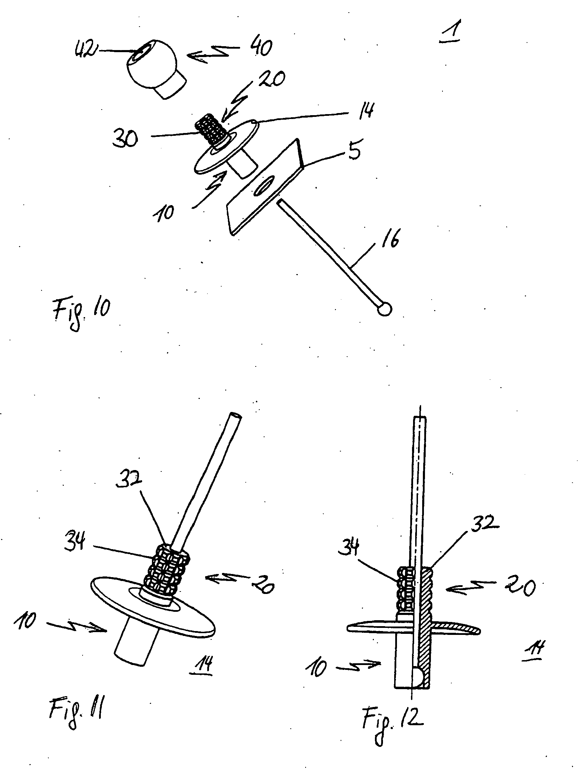

Das Hybridbauteil 1 umfasst zudem einen Befestigungsansatz 20. Dieser Befestigungsansatz 20 ist integral mit dem Bauteilfuß 10 bzw. der Nietkonstruktion verbunden. Der Befestigungsansatz 20 dient dem Befestigen einer Funktionskomponente 40 aus Kunststoff am Bauteilfuß 10. Die Funktionskomponente 40 ist beispielsweise ein Teller- oder Pilzkopf gemäß Fig. 1A, eine Halterung für einen Stoßdämpfer gemäß Fig. 1B oder ein Kugelkopf gemäß Fig. 1C. Die Funktionskomponente 40 ist bereits vor dem Vernieten des Bauteilfußes 10 in einem Strukturbauteil 5 mit dem Befestigungsansatz 20 fest verbunden. Um ein verlässliches Vernieten des Bauteilfußes 10 zu garantieren, umfasst die Funktionskomponente 40 eine durchgehende Öffnung 42. Die Öffnung 42 gewährleistet ein Durchgreifen durch die Funktionskomponente 40, um eine Blindnietmutter 12 mit einem Gewindedorn (nicht gezeigt) oder einen Becher-Dichtblindniet mit Hilfe eines Nietdorns 16 (vgl. Figuren 10 bis 12) problemlos befestigen zu können.

Mit der vorliegenden Erfindung ist man in der Lage, beispielsweise in der Endmontage von Kraftfahrzeugen, das Hybridbauteil 1 als angepassten Befestiger mit nur einem Arbeitsschritt an einem Strukturbauteil 5 von Karosserie oder Rahmen eines Kraftfahrzeugs befestigen zu können. Das Hybridbauteil 1 stellt eine starre bzw. hochfeste Verbindung mit dem Strukturbauteil 5 her, während über die Funktionskomponente 40 aus Kunststoff die Vorteile des Kunststoffs für den Befestiger erhalten bleiben. Zu diesen Vorteilen zählen die Variabilität in der Formgebung durch Spritzverfahren, eine gewisse Flexibilität je nach Kunststoffart, das geringe Gewicht sowie die chemische und mechanische Beständigkeit bei gleichzeitig begrenzten Kosten für das Hybridbauteil 1. Im Vergleich zum Stand der Technik ist es daher nicht erforderlich, zunächst eine Blindnietmutter oder Schweißmutter zu setzen und darin einen Bolzen mit Funktionsabschnitt einzuschrauben. Dies spart Zeit und Aufwand im Fertigungsprozess, da das Hybridbauteil 1 mit nur einem Arbeitsschritt installierbar ist.

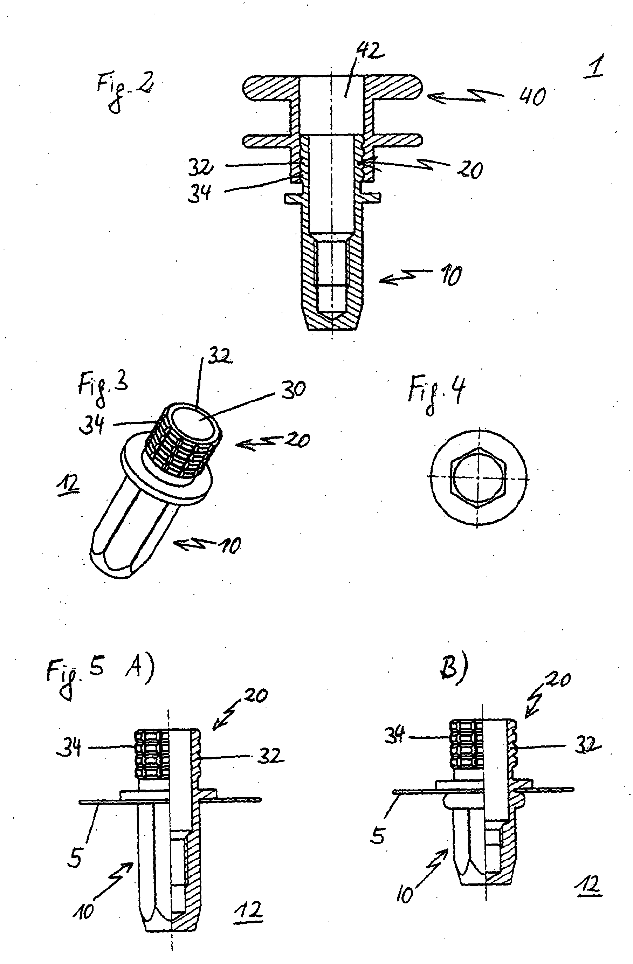

Die Figuren 2 bis 12 zeigen detaillierte Darstellungen der bevorzugten Ausführungsformen des Hybridbauteils 1 aus Fig. 1A bis C. Fig. 2 zeigt ein Hybridbauteil 1 im Schnitt bestehend aus einer Blindnietmutter 12 als Bauteilfuß 10 und der Funktionskomponente 40 in Form eines Pilzkopfes. An der Blindnietmutter 12 ist integral der Befestigungsansatz 20 ausgebildet. Dieser Befestigungsansatz 20 umfasst eine äußere Befestigungskontur 30, um die Funktionskomponente 40 am Bauteilfuß 10 zu halten. Im Speziellen stellt die Befestigungskontur 30 eine passende Struktur bereit, um die aus Kunststoff bestehende Funktionskomponente 40 daran anzuspritzen und verlässlich zu verankern. Die Verankerung verhindert einen Versatz der Funktionskomponente 40 in Richtung der Längsachse der Blindnietmutter 12. Zudem ist es bevorzugt, dass die Verankerung auch eine Verdrehsicherung darstellt, so dass die Funktionskomponente 40 nicht um die Längsachse der Blindnietmutter 12 verdreht werden kann.

Gemäß einer Ausführungsform des Hybridbauteils 1 umfasst die Befestigungskontur 30 einen zylindrischen Bereich 32, an dessen radialer Außenseite eine Rändelung 34 vorgesehen ist. Diese Konstruktion ist in Fig. 3 dargestellt. Die Rändelung 34 stellt vorzugsweise einen Hinterschnitt bereit, der ein Verdrehen der Funktionskomponente 40 um die Längsachse der Blindnietmutter 12 verhindert. In diesem Zusammenhang ist es ebenfalls denkbar, dass die Rändelung 34 zusätzlich oder allein einen Hinterschnitt gegen ein axiales Verschieben der Funktionskomponente 40 in Richtung der Längsachse der Blindnietmutter 12 bereitstellt.

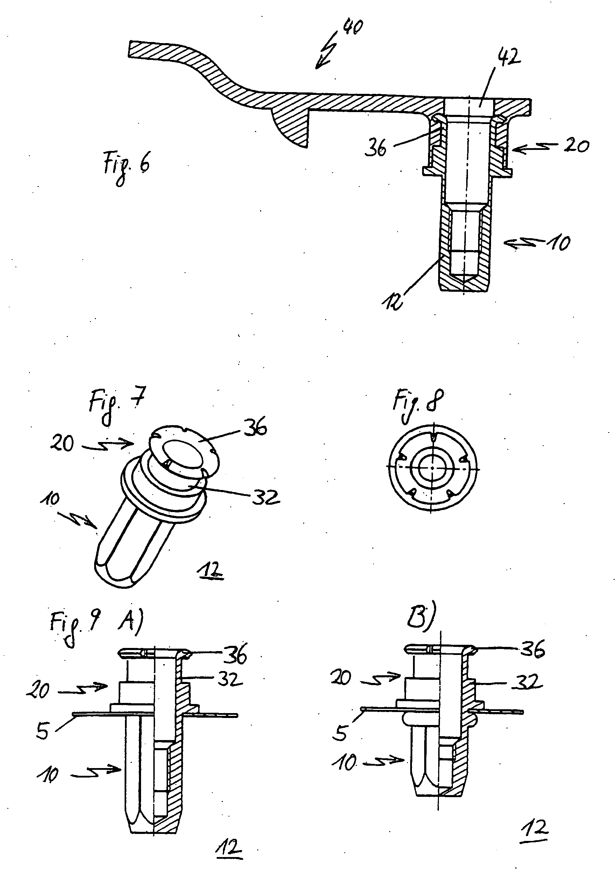

Gemäß einer weiteren Ausführungsform des Hybridbauteils 1 umfasst die Befestigungskontur 30 eine durch Kaltumformung erzeugte Verprägung 36. Diese ist in den Figuren 7 und 8 veranschaulicht.

Allgemein stellt die Befestigungskontur 30 somit eine formschlüssige und/oder kraftschlüssige Verbindung zwischen der Blindnietkonstruktion und der Funktionskomponente 40 bereit. Auf dieser konstruktiven Grundlage ist ein Verdrehen und/oder Versetzen der Funktionskomponente 40 bezogen auf die Längsachse der Nietkonstruktion verhindert.

Gemäß einer weiteren Ausführungsform weist der Bauteilfuß 10 eine polygonale Querschnittsform auf, wie beispielsweise einen Sechskant. Eine derartige Formgestaltung ist in Fig. 4 gezeigt, in der eine Draufsicht auf den Nietschaft der Blindnietmutter aus Fig. 3 dargestellt ist. Wird dieser Sechskant in eine angepasste Öffnung des Strukturbauteils 5, beispielsweise eine Sechskantöffnung, eingesetzt, ist vor dem Befestigen des Hybridbauteils 1 eine vorgegebene Positionierung möglich. Diese VorPositionierung unterstützt die spätere Installation der Komponente im Kraftfahrzeug und liefert eine weitere Verdrehsicherung des Hybridbauteils 1.

In den Figuren 5A, B und 9A, B ist das Befestigen der Blindnietmutter 12 am Strukturbauteil 5 veranschaulicht. Für eine Vereinfachung der Darstellung wurde jeweils die Funktionskomponente 40 nicht dargestellt. In den verschiedenen Figuren sind ebenfalls die bereits oben diskutierten Ausführungsformen der Befestigungskontur 30 erkennbar. Fig. 5 umfasst einen zylindrischen Bereich 32 mit der Rändelung 34, während Fig. 9 die Verprägung 36 zeigt, die am zylindrischen Bereich 32 vorgesehen ist. Während der Installation des Hybridbauteils 1 wird ein Gewindedorn in die Öffnung 42 des Hybridbauteils 1 eingesetzt und gedreht. Durch die Rotation des Gewindedoms wird der Bauteilfuß 10 bzw. der Nietschaft der Blindnietmutter 12 gestaucht, so dass die Blinnietmutter 12 am Strukturbauteil 5 befestigt ist (vgl. Figuren 5B, 9B).

Fig. 6 zeigt eine Schnittdarstellung eines Hybridbauteils 1, das ebenfalls die Blindnietmutter 12 als Bauteilfuß 10 aufweist. Über die Verprägung 36 am Befestigungsansatz 20 ist als Funktionskomponente 40 eine Hebelstruktur befestigt. Diese dient der späteren Befestigung von Stoßdämpfern im Kraftfahrzeug.

Fig. 10 zeigt ein Hybridbauteil 1 mit Kugelkopf als Funktionskomponente 40 in einer Explosionsdarstellung. Der Kugelkopf 40 mit durchlaufender Öffnung 42 ist auf dem Befestigungsansatz 20 mit Befestigungskontur 30 befestigt. Der Befestigungsansatz 20 wiederum ist integral an dem Becher-Dichtblindniet 14 ausgebildet. Zur Gestaltung des Befestigungsansatzes 20 und der Befestigungskontur 30 sind die gleichen Strukturen anwendbar, die unter Bezugnahme auf die Figuren 2 bis 9 beschrieben worden sind. Die Ausführungsformen der Figuren 11 und 12 umfassen beispielsweise den zylindrischen Bereich 32 mit Rändelung 34. Über einen Nietdorn 16 wird der Becher-Dichtblindniet 14 in bekannter Weise am Strukturbauteil 5 befestigt, so dass das auf diese Weise festgelegte Hybridbauteil 1 der Kopplung weiterer Komponenten am Strukturbauteil 5 dient.

## Patentansprüche

1. Hybridbauteil (1) zur Befestigung von Funktionselementen, insbesondere im Kraftfahrzeug, das die folgenden Merkmale aufweist:
a. einen Bauteilfuß (10) bestehend aus einer Blindnietkonstruktion aus Metall, mit dem das Hybridbauteil (1) starr an einem Strukturbauteil (5) befestigbar ist,
b. einen Befestigungsansatz (20), der mit dem Bauteilfuß (10) verbunden ist und eine Befestigungskontur (30) für eine Funktionskomponente (40) umfasst, während
c. die Funktionskomponente (40) aus Kunststoff besteht und mit dem Befestigungsansatz (20) verbunden ist, so dass über die Funktionskomponente (40) und den Bauteilfuß (10) eine Komponente an das Strukturbauteil (5) koppelbar ist, **dadurch gekennzeichnet, dass**
d. mittels der Befestigungskontur (30) durch eine radial außen liegende Rändelung (34) oder eine Verprägung (36) an einem zylindrischen Bereich (32) der Befestigungskontur (30) eine verdrehsichere und axial unverschiebbare Verankerung der Funktionskomponente (40) am Bauteilfuß (10) realisierbar ist, so dass die Funktionskomponente (40) mit dem Befestigungsansatz (20) fest verbunden ist.

2. Hybridbauteil (1) gemäß Anspruch 1, dessen Bauteilfuß (10) durch eine Blindnietmutter (12) oder einen Dichtblindniet (14) gebildet wird.

3. Hybridbauteil (1) gemäß einem der vorhergehenden Ansprüche, dessen Befestigungsansatz (20) integral mit dem Bauteilfuß (10) verbunden ist.

4. Hybridbauteil (1) gemäß Anspruch 1, dessen radial außen liegende Rändelung (34) einen Hinterschnitt gegen Rotation und axiale Translation bildet.

5. Hybridbauteil (1) gemäß Anspruch 1, dessen Verprägung (36) durch Kaltumformung erzeugt ist.

6. Hybridbauteil (1) gemäß einem der vorhergehenden Ansprüche, dessen Funktionskomponente (40) über Kunststoffumspritzung am Befestigungsansatz (20) befestigt ist.

7. Hybridbauteil (1) gemäß einem der vorhergehenden Ansprüche 1 bis 3, dessen Funktionskomponente (40) durch Kleben, Schrauben oder Vernieten am Befestigungsansatz (20) befestigt ist.

8. Strukturbauteil (5), insbesondere im Kraftfahrzeug, mit einem Hybridbauteil (1) gemäß einem der vorhergehenden Ansprüche.

## Claims

1. Hybrid component (1) for the fastening of functional elements, in particular in an automobile, which has the following characteristics:
a. a component foot (10) consisting of a blind rivet construction made of metal with which the hybrid component (1) can be rigidly fastened to a structural component (5);
b. a fastening appendage (20), which is connected with the component foot (10) and comprises a fastening contour (30) for a functional component (40), wherein
c. the functional component (40) is made of plastic and is connected with the fastening appendage so that a component can be coupled with the structural component (5) via the functional component (40) and the component foot (10), **characterized in that**
d. a torque-proof and axially unshiftable anchoring of the functional component (40) can be realized on the component foot (10) by means of the fastening contour (30) having a cylindrical area (32) with a knurl (34) lying outside radially or an imprinting (36) on a cylindrical area (32) of the fastening contour (30) so that the functional component (40) is rigidly connected to the fastening appendage (20).

2. Hybrid component (1) according to claim 1, the component foot (10) of which is formed through a blind rivet nut (12) or a sealed blind rivet (14).

3. Hybrid component (1) according to one of the preceding claims, the fastening appendage (20) of which is integrally connected with the component foot (10).

4. Hybrid component (1) according to claim 1, wherein the cylindrical area with a knurl (34) lying outside radially forms an undercut against rotation and axial translation.

5. Hybrid component (1) according to claim 1, wherein the imprinting (36) is created through cold forming.

6. Hybrid component (1) according to one of the preceding claims, wherein the functional component (40) of which is fastened on the fastening appendage (20) via plastic extrusion coating.

7. Hybrid component (1) according to one of the preceding claims 1-3, wherein the functional component (40) of which is fastened on the fastening appendage (20) through gluing, screwing or riveting.

8. Structural component (5), in particular of an automobile, being connected to the automobile by means of a hybrid component according to one of the preceding claims.

## Revendications

1. Composant hybride (1) pour la fixation d'éléments fonctionnels, notamment dans le véhicule automobile, qui présente les caractéristiques suivantes :
a. un pied de composant (10) constitué d'une construction à rivet borgne en métal avec lequel le composant hybride (1) peut être fixé de manière rigide à un composant structurel (5),
b. une rallonge de fixation (20) qui est reliée au pied de composant (10) et comprend un contour de fixation (30) pour un composant fonctionnel (40), tandis que
c. le composant fonctionnel (40) se compose de plastique et est relié à la rallonge de fixation (20), de sorte qu'un composant peut être raccordé au composant structurel (5) par le biais du composant fonctionnel (40) et du pied de composant (10), **caractérisé en ce que**
d. un ancrage du composant fonctionnel (40) résistant à la torsion et ne pouvant pas coulisser axialement sur le pied de composant (10) peut être réalisé au moyen du contour de fixation (30) par un moletage radialement extérieur (34) ou un estampage (36) sur une région cylindrique (32) du contour de fixation (30), de sorte que le composant fonctionnel (40) est relié solidement à la rallonge de fixation (20).

2. Composant hybride (1) selon la revendication 1, dont le pied de composant (10) est formé par un écrou à rivet borgne (12) ou un rivet borgne étanche (14).

3. Composant hybride (1) selon l'une quelconque des revendications précédentes, dont la rallonge de fixation (20) est intégralement reliée au pied de composant (10).

4. Composant hybride (1) selon la revendication 1, dont le moletage radialement extérieur (34) forme une contre-dépouille contre la rotation et la translation axiale.

5. Composant hybride (1) selon la revendication 1, dont l'estampage (36) est produit par déformation à froid.

6. Composant hybride (1) selon l'une quelconque des revendications précédentes, dont le composant fonctionnel (40) est fixé à la rallonge de fixation (20) par le biais d'une extrusion de plastique.

7. Composant hybride (1) selon l'une quelconque des revendications précédentes 1 à 3, dont le composant fonctionnel (40) est fixé à la rallonge de fixation (20) par collage, vissage ou rivetage.

8. Composant structurel (5), notamment dans le véhicule automobile, comprenant un composant hybride (1) selon l'une quelconque des revendications précédentes.
